# EUROPÄISCHE PATENTSCHRIFT

(11) **EP 1 613 926 B1**
(45) Veröffentlichungstag und Bekanntmachung des Hinweises auf die Patenterteilung: **09.05.2007**
(21) Anmeldenummer: 04723594.0
(22) Anmeldetag: 26.03.2004
(51) Int. Cl.: G01C 19/56, G01C 25/00

(54) **VERFAHREN ZUR ERMITTLUNG EINES NULLPUNKTFEHLERS IN EINEM CORIOLISKREISEL UND CORIOLISKREISEL MIT NULLPUNKTFEHLERERMITTLUNG**
METHOD FOR DETERMINING A ZERO-POINT ERROR IN A VIBRATORY GYROSCOPE AND VIBRATORY GYROSCOPE WITH ZERO-POINT ERROR DETERMINATION
PROCEDE POUR DETERMINER UNE DEVIATION RESIDUELLE DANS UN GYROSCOPE VIBRANT ET GYROSCOPE VIBRANT AVEC UNE DETERMINATION DE DEVIATION RESIDUELLE

(30) Priorität: 14.04.2003 DE 10317158
(43) Veröffentlichungstag der Anmeldung: 11.01.2006
(73) Patentinhaber: LITEF GmbH, 79115 Freiburg (DE)
(72) Erfinder: SCHRÖDER, Werner, 77955 Ettenheim (DE)
(74) Vertreter: Müller, Frithjof E.
(86) Internationale Anmeldenummer: PCT/EP2004/003248
(87) Internationale Veröffentlichungsnummer: WO 2004/090471

(56) Entgegenhaltungen:
- DE-A- 4 447 005
- DE-A- 10 049 462
- DE-A- 10 131 760
- DE-A- 19 845 185

## Beschreibung

Die Erfindung betrifft ein Verfahren zur Ermittlung eines Nullpunktfehlers in einem Corioliskreisel.

Corioliskreisel (auch Vibrationskreisel genannt) werden in zunehmendem Umfang zu Navigationszwecken eingesetzt. Corioliskreisel weisen ein Massensystem auf, das in Schwingungen versetzt wird. Diese Schwingung ist in der Regel eine Überlagerung einer Vielzahl von Einzelschwingungen. Diese Einzelschwingungen des Massensystems sind zunächst voneinander unabhängig und lassen sich jeweils abstrakt als "Resonatoren" auffassen. Zum Betrieb eines Vibrationskreisels sind wenigstens zwei Resonatoren erforderlich: einer dieser Resonatoren (erster Resonator) wird künstlich zu Schwingungen angeregt, die im Folgenden als "Anregungsschwingung" bezeichnet wird. Der andere Resonator (zweiter Resonator) wird nur dann zu Schwingungen angeregt, wenn der Vibrationskreisel bewegt/gedreht wird. In diesem Fall treten nämlich Corioliskräfte auf, die den ersten Resonator mit dem zweiten Resonator koppeln, der Anregungsschwingung des ersten Resonators Energie entnehmen und diese auf die Ausleseschwingung des zweiten Resonators übertragen. Die Schwingung des zweiten Resonators wird im Folgenden als "Ausleseschwingung" bezeichnet. Um Bewegungen (insbesondere Drehungen) des Corioliskreisels zu ermitteln, wird die Ausleseschwingung abgegriffen und ein entsprechendes Auslesesignal (z. B. das Ausleseschwingungs-Abgriffsignal) daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-Systeme als auch als Closed-Loop-Systeme realisiert werden. In einem Closed-Loop-System wird über jeweilige Regelkreise die Amplitude der Ausleseschwingung fortlaufend auf einen festen Wert - vorzugsweise null - zurückgestellt.

Das Dokument DE-A-100 49 462 beschreibt ein Verfahren und eine Vorrichtung zum elektronischen Nullpunktabgleich eines mikromechanischen Sensors durch Anlegen eines elektrischen Potentials. Das Dokument DE-A-44 47 005 offenbart einen Drehratensensor mit einer Funktionsüberprüfung durch Einkoppeln einer Störgröße.

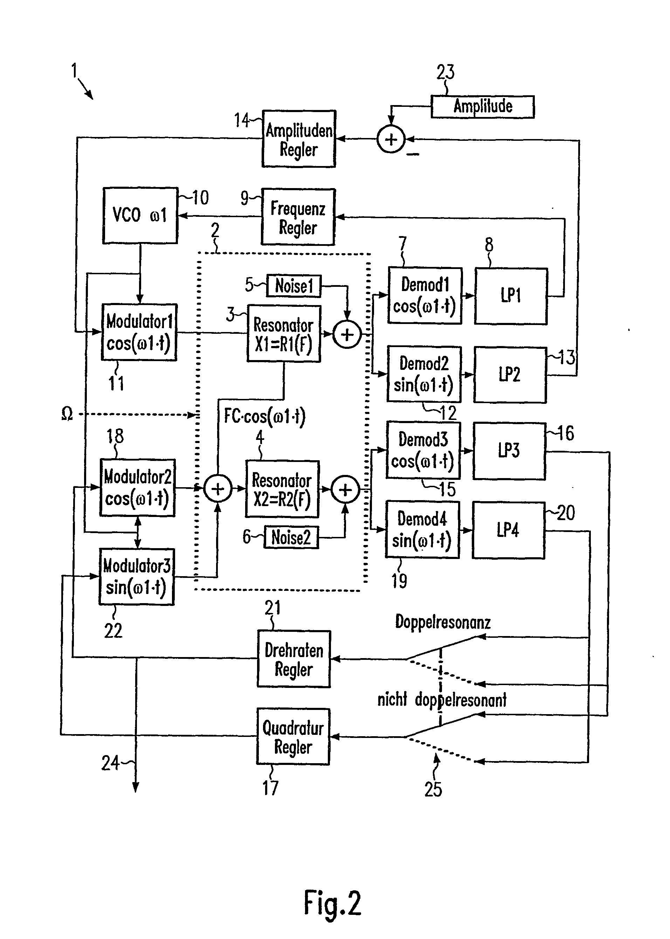

Im Folgenden wird zur weiteren Verdeutlichung der Funktionsweise eines Corioliskreisels unter Bezugnahme auf Figur 2 ein Beispiel eines Corioliskreisels in Closed-Loop-Ausführung beschrieben.

Ein solcher Corioliskreisel 1 weist ein in Schwingungen versetzbares Massensystem 2 auf, das im Folgenden auch als "Resonator" bezeichnet wird. Diese Bezeichnung ist zu unterscheiden von den oben erwähnten "abstrakten" Resonatoren, die Einzelschwingungen des "echten" Resonators darstellen. Wie bereits erwähnt, kann der Resonator 2 als System aus zwei "Resonatoren" (erster Resonator 3 und zweiter Resonator 4) aufgefasst werden. Sowohl der erste als auch der zweite Resonator 3, 4 sind jeweils an einen Kraftgeber (nicht gezeigt) und an ein Abgriffssystem (nicht gezeigt) gekoppelt. Das Rauschen, das durch die Kraftgeber und die Abgriffssysteme erzeugt wird, ist hier durch Noise1 (Bezugszeichen 5) und Noise2 (Bezugszeichen 6) schematisch angedeutet.

Der Corioliskreisel 1 weist des Weiteren vier Regelkreise auf:

Ein erster Regelkreis dient zur Regelung der Anregungsschwingung (d.h. der Frequenz des ersten Resonators 3) auf eine feste Frequenz (Resonanzfrequenz). Der erste Regelkreis weist einen ersten Demodulator 7, ein erstes Tiefpassfilter 8, einen Frequenzregler 9, einen VCO ("Voltage Controlled Oscillator") 10 und einen ersten Modulator 11 auf.

Ein zweiter Regelkreis dient zur Regelung der Anregungsschwingung auf eine konstante Amplitude und weist einen zweiten Demodulator 12, ein zweites Tiefpassfilter 13 und einen Amplitudenregler 14 auf.

Ein dritter und ein vierter Regelkreis dienen zur Rückstellung derjenigen Kräfte, die die Ausleseschwingung anregen. Dabei weist der dritte Regelkreis einen dritten Demodulator 15, ein drittes Tiefpassfilter 16, einen Quadraturregler 17 und einen dritten Modulator 22 auf. Der vierte Regelkreis enthält einen vierten Demodulator 19, ein viertes Tiefpassfilter 20, einen Drehratenregler 21 und einen zweiten Modulator 18.

Der erste Resonator 3 wird mit dessen Resonanzfrequenz ω1 angeregt. Die resultierende Anregungsschwingung wird abgegriffen, mittels des ersten Demodulators 7 in Phase demoduliert, und ein demodulierter Signalanteil wird dem ersten Tiefpassfilter 8 zugeführt, der daraus die Summenfrequenzen entfernt. Das abgegriffene Signal wird im Folgenden auch als Anregungsschwingungs-Abgriffsignal bezeichnet. Ein Ausgangssignal des ersten Tiefpassfilters 8 beaufschlagt einen Frequenzregler 9, der in Abhängigkeit des ihm zugeführten Signals den VCO 10 so regelt, dass die In-Phase-Komponente im Wesentlichen zu Null wird. Dazu gibt der VCO 10 ein Signal an den ersten Modulator 11, der seinerseits einen Kraftgeber so steuert, dass der erste Resonator 3 mit einer Anregungskraft beaufschlagt wird. Ist die In-Phase-Komponente Null, so schwingt der erste Resonator 3 auf seiner Resonanzfrequenz ω1. Es sei erwähnt, dass sämtliche Modulatoren und Demodulatoren auf Basis dieser Resonanzfrequenz ω1 betrieben werden.

Das Anregungsschwingungs-Abgriffsignal wird des Weiteren dem zweiten Regelkreis zugeführt und durch den zweiten Demodulator 12 demoduliert, dessen Ausgabe das zweite Tiefpassfilter 13 passiert, dessen Ausgangssignal wiederum dem Amplitudenregler 14 zugeführt wird. In Abhängigkeit dieses Signals und eines Soll-Amplitudengebers 23 regelt der Amplitudenregler 14 den ersten Modulator 11 so, dass der erste Resonator 3 mit einer konstanten Amplitude schwingt (d.h. die Anregungsschwingung weist eine konstante Amplitude auf).

Wie bereits erwähnt wurde, treten bei Bewegung/Drehungen des Corioliskreisels 1 Corioliskräfte - in der Zeichnung durch den Term FC.cos(ω·t) angedeutet - auf, die den ersten Resonator 3 mit dem zweiten Resonator 4 koppeln und damit den zweiten Resonator 4 zum Schwingen anregen. Eine resultierende Ausleseschwingung der Frequenz ω2 wird abgegriffen, sodass ein entsprechendes Ausleseschwingungs-Abgriffsignal (Auslesesignal) sowohl dem dritten als auch dem vierten Regelkreis zugeführt wird. Im dritten Regelkreis wird dieses Signal durch den dritten Demodulator 15 demoduliert, Summenfrequenzen durch das dritte Tiefpassfilter 16 entfernt und das tiefpassgefilterte Signal dem Quadraturregler 17 zugeführt, dessen Ausgangssignal den dritten Modulator 22 so beaufschlagt, dass entsprechende Quadraturanteile der Ausleseschwingung rückgestellt werden. Analog hierzu wird im vierten Regelkreis das Ausleseschwingungs-Abgriffsignal durch den vierten Demodulator 19 demoduliert, durchläuft das vierte Tiefpassfilter 20, und ein entsprechend tiefpassgefiltertes Signal beaufschlagt einerseits den Drehratenregler 21, dessen Ausgangssignal proportional zur momentanen Drehrate ist und als Drehraten-Messergebnis auf einen Drehratenausgang 24 gegeben wird, und andererseits den zweiten Modulator 18, der entsprechende Drehratenanteile der Ausleseschwingung rückstellt.

Ein Corioliskreisel 1 wie oben beschrieben kann sowohl doppelresonant als auch nichtdoppelresonant betrieben werden. Wird der Corioliskreisel 1 doppelresonant betrieben, so ist die Frequenz ω2 der Ausleseschwingung annähernd gleich der Frequenz ω1 der Anregungsschwingung, wohingegen im nichtdoppelresonanten Fall die Frequenz ω2 der Ausleseschwingung verschieden von der Frequenz ω1 der Anregungsschwingung ist. Im Fall der Doppelresonanz beinhaltet das Ausgangssignal des vierten Tiefpassfilters 20 entsprechende Information über die Drehrate, im nichtdoppelresonanten Fall dagegen das Ausgangssignal des dritten Tiefpassfilters 16. Um zwischen den unterschiedlichen Betriebsarten doppelresonant/nichtdopelresonant umzuschalten, ist ein Doppelschalter 25 vorgesehen, der die Ausgänge des dritten und vierten Tiefpassfilters 16, 20 wahlweise mit dem Drehratenregler 21 und dem Quadraturregler 17 verbindet.

Das Massensystem 2 (Resonator) weist generell mehrere Eigenresonanzen auf, d. h. es können verschiedene Eigenschwingungen des Massensystems 2 angeregt werden. Eine dieser Eigenschwingungen ist die künstlich erzeugte Anregungsschwingung. Eine weitere Eigenschwingung stellt die Ausleseschwingung dar, die durch die Corioliskräfte bei Drehung des Corioliskreisels 1 angeregt wird. Durch die mechanische Struktur bedingt bzw. aufgrund unvermeidbarer Fertigungstoleranzen kann nicht verhindert werden, dass neben der Anregungsschwingung und der Ausleseschwingung auch andere Eigenschwingungen des Massensystems 2, teilweise weitab von deren Resonanz, angeregt werden. Die unerwünscht angeregten Eigenschwingungen bewirken jedoch eine Änderung des Ausleseschwingungs-Abgriffsignals, da diese Eigenschwingungen am Ausleseschwingungs-Signalabgriff wenigstens teilweise mitausgelesen werden. Das Ausleseschwingungs-Abgriffsignal setzt sich demnach aus einem Teil, der durch Corioliskräfte hervorgerufen wird, und einem Teil, der von der Anregung unerwünschter Resonanzen herrührt, zusammen. Der unerwünschte Teil verursacht einen Nullpunktfehler des Corioliskreisels, dessen Größe nicht bekannt ist, womit beim Abgreifen des Ausleseschwingungs-Abgriffsignals nicht zwischen diesen beiden Teilen differenziert werden kann.

Die der Erfindung zugrunde liegende Aufgabe ist es, ein Verfahren bereit zu stellen, mit dem der oben beschriebene Einfluss der Schwingungen "dritter" Moden bestimmt und somit der Nullpunktfehler ermittelt werden kann.
Diese Aufgabe wird durch das Verfahren gemäß den Merkmalen des Patentanspruchs 1 gelöst. Ferner stellt die Erfindung einen Corioliskreisel gemäß Patentanspruch 7 bereit. Vorteilhafte Ausgestaltungen und Weiterbildungen der Erfindung finden sich in jeweiligen abhängigen Ansprüchen.

Erfindungsgemäß wird bei einem Verfahren zur Ermittlung eines Nullpunktfehlers eines Corioliskreisels der Resonator des Corioliskreisels mit entsprechenden Störkräften so beaufschlagt, dass wenigstens eine Eigenschwingung des Resonators, die sich von der Anregungsschwingung und der Ausleseschwingung des Resonators unterscheidet, angeregt wird, wobei eine Änderung eines die Ausleseschwingung repräsentierenden Auslesesignals, die aus der Anregung der wenigstens einen Eigenschwingung resultiert, als Maß für den Nullpunktfehler ermittelt wird.

Unter "Resonator" wird hierbei das gesamte in Schwingung versetzbare Massensystem des Corioliskreisels verstanden, also mit Bezug auf Fig. 2 der mit Bezugsziffer 2 gekennzeichnete Teil des Corioliskreisels.

Die der Erfindung zugrundeliegende Idee ist, unerwünschte Eigenschwingungen des Resonators (d. h. Eigenschwingungen, die weder die Anregungsschwingung noch die Ausleseschwingung sind) künstlich anzuregen, und deren Auswirkungen auf das Ausleseschwingungs-Abgriffsignal zu beobachten. Die Anregung der unerwünschten Eigenschwingungen erfolgt hierbei durch Beaufschlagen des Resonators mit entsprechenden Störkräften. Die "Durchschlagsstärke" derartiger Störungen auf das Ausleseschwingungs-Abgriffsignal stellt ein Maß für den Nullpunktfehler ("Bias") des Corioliskreisels dar. Ermittelt man also die Stärke eines in dem Ausleseschwingungs-Abgriffsignal enthaltenen Störanteils und vergleicht man diesen mit der Stärke der diesen Störanteil erzeugenden Störkräfte, so lässt sich daraus der Nullpunktfehler ableiten.

Vorzugsweise erfolgt die künstliche Anregung der Eigenschwingungen sowie das Ermitteln des "Durchschlags" der Eigenschwingungen auf das Ausleseschwingungs-Abgriffsignal während des Betriebs des Corioliskreisels. Die Bestimmung des Nullpunktfehlers kann jedoch auch ohne Existenz von Anregungsschwingung durchgeführt werden.
Die Störkräfte sind vorzugsweise Wechselkräfte mit ensprechenden Störfrequenzen, beispielsweise eine Überlagerung von Sinus- bzw. Kosinuskräften. Hierbei sind die Störfrequenzen vorteilhafterweise gleich oder im Wesentlichen gleich den Eigenschwingungsfrequenzen des Resonators. Die Änderungen des Auslesesignals (Störanteil) können erfasst werden, indem das Auslesesignal einem Demodulationsprozess auf Basis der Störfrequenzen unterworfen wird.

Vorzugsweise erfolgt die Ermittlung des Nullpunktfehlerbeitrags, der durch eine der wenigstens einen Eigenschwingung (d. h. durch eine der "dritten" Moden) bewirkt wird, durch Ermitteln der Stärke der entsprechenden Änderung im Auslesesignal, Ermitteln der entsprechenden Resonanzgüte der Eigenschwingung und durch Verrechnen von ermittelter Stärke und Resonanzgüte.

Die Ermittlung der Resonanzgüte einer Eigenschwingung erfolgt vorzugsweise durch Verstimmen der entsprechenden Störfrequenz bei gleichzeitigem Messen der dadurch bewirkten Änderung im Auslesesignal.

Um die Auswirkungen der unerwünschten Eigenschwingungen auf das Ausleseschwingungs-Abgriffsignal zu untersuchen, können mehrere der Eigenschwingungenen gleichzeitig angeregt werden, und deren "gemeinsamer" Einfluss auf das Ausleseschwingungs-Abgriffsignal erfasst werden. Vorzugsweise werden alle interessierenden störenden Eigenschwingungen jedoch einzeln angeregt und deren jeweilige Auswirkung auf das Ausleseschwingungs-Abgriffsignal separat beobachtet. Die somit erhaltenen Nullpunkfehlerbeiträge der einzelnen Eigenschwingungen können dann addiert werden, um den durch die Eigenschwingungen bewirkten "Gesamtnullpunktfehler" (hier als "Nullpunktfehler" bezeichnet) zu bestimmen.

Der Störanteil kann direkt aus dem Ausleseschwingungs-Abgriffsignal ermittelt werden.

Die Erfindung stellt weiterhin einen Corioliskreisel bereit, der gekennzeichnet ist durch eine Einrichtung zur Bestimmung eines Nullpunktfehlers des Corioliskreisels. Die Einrichtung weist auf:
- eine Störeinheit, die den Resonator des Corioliskreisels mit entsprechenden Störkräften so beaufschlagt, dass wenigstens eine Eigenschwingung des Resonators, die sich von der Anregungsschwingung und der Ausleseschwingung des Resonators unterscheidet, angeregt wird, und
- eine Störsignal-Detektiereinheit, die einen Störanteil, der in einem die Ausleseschwingung repräsentierenden Auslesesignal enthalten ist und durch die Anregung der wenigstens einen Eigenschwingung bewirkt wurde, als Maß für den Nullpunktfehler ermittelt.

Wenn die Störkräfte durch Wechselkräfte mit bestimmten Störfrequenzen gegeben sind, weist die Störsignal-Detektiereinheit eine Demodulationseinheit auf, mit der das Auslesesignal einem Demodulationsprozess (synchrone Demodulation mit den Störfrequenzen) unterzogen wird. Auf diese Weise wird aus dem Auslesesignal der Störanteil ermittelt.

Vorzugsweise weist die Störsignal-Detektiereinheit zwei in Quadratur zueinander arbeitende Demodulatoren, zwei Tiefpassfilter und eine Steuer- und Auswerteeinheit auf, wobei den Demodulatoren das Ausleseschwingungs-Abgriffsignal zugeführt wird, die Ausgabesignale der beiden Demodulatoren durch jeweils eines der Tiefpassfilter gefiltert werden und die Ausgangssignale der Tiefpassfilter der Steuer- und Auswerteeinheit zugeführt werden, die darauf basierend den Nullpunktfehler ermittelt.

Die Steuer- und Auswerteeinheit beaufschlagt auf Basis der ihr zugeführten Signale die Störeinheit, womit die Frequenzen der Störkräfte durch die Steuer- und Auswerteeinheit regelbar sind.

Für die Ermittlung des Nullpunktfehlers ist sowohl die Stärke des Störanteils im Auslesesignal als auch die Resonanzgüte der entsprechenden Eigenschwingung zu ermitteln. Sodann sind diese Werte zu verrechnen, um den Nullpunktfehler zu erhalten. Für die Ermittlung der Resonanzgüte ist eine Verstimmung der Frequenz der Störeinheit über die Resonanz bei gleichzeitiger Messung über die Störsignal-Detektoreinheit erforderlich. Dies wird vorzugsweise mittels einer Software realisiert, die Folgendes tut:
- Aufsuchen der "wesentlichen" dritten (störenden) Eigenresonanzen
- Abfahren der zugehörigen Resonanzkurve
- Berechnung der Güte und der Stärke der Anregung und der "Sichtbarkeit" dieser dritten Schwingung im Auslesekanal
- Berechnung des Beitrags dieser dritten Schwingung zum Bias auf Basis von Güte, Stärke und "Sichtbarkeit"

Der Bias kann durch die Software rechnerisch kompensiert werden.

Im Folgenden wird unter Bezugnahme auf die begleitenden Figuren die Erfindung in beispielsweiser Ausführungsform näher erläutert. Es zeigen:
- **Figur 1**: den schematischen Aufbau eines Corioliskreisels, der auf dem erfindungsgemäßen Verfahren basiert;
- **Figur 2**: den schematischen Aufbau eines herkömmlichen Corioliskreisels;

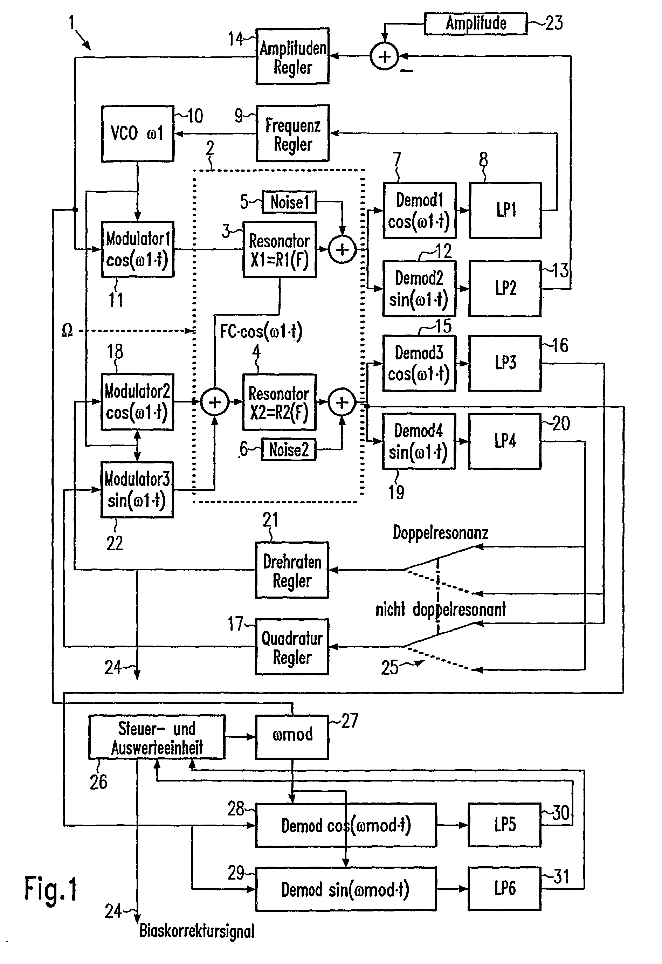

In den Zeichnungen sind Teile bzw. Einrichtungen, die denen aus Figur 2 entsprechen, mit den selben Bezugszeichen gekennzeichnet und werden nicht nochmals erläutert. In der folgenden Beschreibung wird unter Bezugnahme auf Figur 1 das erfindungsgemäße Verfahren in beispielsweiser Ausführungsform näher erläutert.

Ein rückgestellter Corioliskreisel ist zusätzlich mit einer Steuer- und Auswerteeinheit 26, einem Modulator 27 (Störeinheit) mit verstellbarer Frequenz ωmod und vorzugsweise verstellbarer Amplitude, zwei in Quadratur bei der Frequenz ωmod arbeitenden Demodulatoren 28, 29, und einem fünften und sechsten Tiefpassfilter 30 und 31 versehen. Die Störeinheit 27 erzeugt ein Wechselsignal mit der Frequenz ωmod, das auf den Krafteingang des Anregungsschwingers (erster Resonator 3) aufaddiert wird. Ferner wird dieses Signal den Demodulatoren 28, 29 als Referenzsignal zugeführt. Damit wird der Resonator 2 zusätzlich mit einer Wechselkraft, die dem Wechselsignal entspricht, beaufschlagt. Diese Wechselkraft regt zusätzlich zur Anregungsschwingung eine weitere Eigenschwingung (auch als "dritte" Eigenmode bezeichnet) des Resonators 2 an, deren Auswirkungen sich in Form eines Störanteils im Ausleseschwingungs-Abgriffsignal beobachten lassen. In diesem Beispiel wird das Ausleseschwingungs-Abgriffsignal einem Demodulationsprozess in Phase und Quadratur zur durch den Modulator 27 bewirkten Anregung unterzogen, der durch die Demodulatoren 28, 29 ausgeführt wird und bei der Frequenz ωmod (Störfrequenz) erfolgt. Das somit erhaltene Signal wird tiefpassgefiltert (durch das fünfte und sechste Tiefpassfilter 30, 31) und der Steuer- und Auswerteeinheit 26 zugeführt. Diese Steuer- und Auswerteeinheit 26 steuert die Frequenz ωmod und eventuell die Anregungsamplitude des durch den Modulator 27 erzeugten Wechselsignals derart, dass die Frequenzen und Stärken der "wesentlichen" dritten Eigenmoden sowie deren Güten laufend ermittelt werden. Die Steuer- und Auswerteeinheit 26 berechnet hieraus den jeweils aktuellen Biasfehler und führt sie einer Korrektur des Kreiselbias zu.

## Patentansprüche

1. Verfahren zur Ermittlung eines Nullpunktfehlers eines Corioliskreisels (1'), bei dem
- der Resonator (2) des Corioliskreisels (1') mit entsprechenden Störkräften so beaufschlagt wird, dass wenigstens eine Eigenschwingung des Resonators (2), die sich von der Anregungsschwingung und der Ausleseschwingung des Resonators (2) unterscheidet, angeregt wird, und
- eine Änderung eines die Ausleseschwingung repräsentierenden Auslesesignals, die aus der Anregung der wenigstens einen Eigenschwingung resultiert, als Maß für den Nullpunktfehler ermittelt wird.

2. Verfahren nach Anspruch 1, **dadurch gekennzeichnet, dass** die Störkräfte Wechselkräfte mit ensprechenden Störfrequenzen sind, wobei die Störfrequenzen Eigenschwingungs-Frequenzen des Resonators (2) sind.

3. Verfahren nach Anspruch 2, **dadurch gekennzeichnet, dass** die Änderung des Auslesesignals erfasst wird, indem das Auslesesignal einem Demodulationsprozess auf Basis der Störfrequenzen unterworfen wird.

4. Verfahren nach einem der Ansprüche 1 bis 3, **dadurch gekennzeichnet, dass** die Ermittlung des Nullpunktfehlerbeitrags, der durch eine der wenigstens einen Eigenschwingung bewirkt wird, durch Ermitteln der Stärke der entsprechenden Änderung im Auslesesignal, Ermitteln der entsprechenden Resonanzgüte der Eigenschwingung und durch Verrechnen von ermittelter Stärke und Resonanzgüte erfolgt.

5. Verfahren nach Anspruch 4, **dadurch gekennzeichnet, dass** die Ermittlung der Resonanzgüte einer Eigenschwingung durch Verstimmen der entsprechenden Störfrequenz bei gleichzeitigem Messen der **dadurch** bewirkten Änderung im Auslesesignal erfolgt.

6. Verfahren nach einem der vorstehenden Ansprüche, **dadurch gekennzeichnet, dass** sukzessive mehrere Eigenschwingungen des Resonators (2) angeregt werden, entsprechende Änderungen des Auslesesignals erfasst werden, und entsprechende Nullpunkfehlerbeiträge ermittelt werden, wobei der Nullpunktfehler des Corioliskreisels (1') durch Addition der Nullpunkfehlerbeiträge bestimmt wird.

7. Corioliskreisel (1') mit einem Resonator (2), **gekennzeichnet durch** eine Einrichtung zur Bestimmung des Nullpunktfehlers des Corioliskreisels (1'), mit:
- einer Störeinheit (27), die den Resonator (2) des Corioliskreisels (1') mit entsprechenden Störkräften so beaufschlagt, dass wenigstens eine Eigenschwingung des Resonators (2) angeregt wird, die sich von der Anregungsschwingung und der Ausleseschwingung des Resonators (2) unterscheidet, und
- einer Störsignal-Detektiereinheit (26, 28, 29, 30, 31), die einen Störanteil, der in einem die Ausleseschwingung repräsentierenden Auslesesignal enthalten ist und **durch** die Anregung der wenigstens einen Eigenschwingung bewirkt wurde, als Maß für den Nullpunktfehler ermittelt.

8. Corioliskreisel (1') nach Anspruch 7, **dadurch gekennzeichnet, dass** die Störsignal-Detektiereinheit aus zwei in Quadratur zueinander arbeitenden Demodulatoren (28, 29), zwei Tiefpassfiltern (30, 31) und einer Steuer- und Auswerteeinheit (26) besteht, wobei den Demodulatoren (28, 29) das Ausleseschwingungs-Abgriffsignal zugeführt wird, die Ausgabesignale der beiden Demodulatoren (28, 29) durch jeweils eines der Tiefpassfilter (30, 31) gefiltert werden und die Ausgangssignale der Tiefpassfilter (30, 31) der Steuer- und Auswerteeinheit (26) zugeführt werden, die darauf basierend den Nullpunktfehler ermittelt.

9. Corioliskreisel (1') nach Anspruch 8, **dadurch gekennzeichnet, dass** die Steuer- und Auswerteeinheit (26) auf Basis der ihr zugeführten Signale die Störeinheit beaufschlagt, womit die Frequenzen der Störkräfte durch die Steuer- und Auswerteeinheit (26) regelbar sind.

## Claims

1. A method for determination of a zero error in a Coriolis gyro (1') in which
- the resonator (2) of the Coriolis gyro (1') has appropriate disturbance forces applied to it such that at least one natural oscillation of the resonator (2) is stimulated, which differs from the stimulating oscillation and from the read oscillation of the resonator (2), and
- a change in a read signal which represents the read oscillation and results from the stimulation of the at least one natural oscillation is determined as a measure of the zero error.

2. The method as claimed in claim 1, **characterized in that** the disturbance forces are alternating forces at appropriate disturbance frequencies, with the disturbance frequencies being natural oscillation frequencies of the resonator (2).

3. The method as claimed in claim 2, **characterized in that** the change in the read signal is recorded by subjecting the read signal to a demodulation process based on the disturbance frequencies.

4. The method as claimed in one of claims 1 to 3, **characterized in that** the zero error contribution which is produced by one of the at least one natural oscillations is determined by determination of the strength of the corresponding change in the read signal, determination of the corresponding resonance Q-factor of the natural oscillation and by calculation of the determined strength and resonance Q-factor.

5. The method as claimed in claim 4, **characterized in that** the resonance Q-factor of a natural oscillation is determined by detuning the corresponding disturbance frequency while at the same measuring the change produced by this in the read signal.

6. The method as claimed in one of the preceding claims, **characterized in that** two or more successive natural oscillations of the resonator (2) are stimulated, corresponding changes in the read signal are recorded, and corresponding zero error contributions are determined, with the zero error of the Coriolis gyro (1') being determined by addition of the zero error contributions.

7. A Coriolis gyro (1') with a resonator (2) **characterized by** a device for determination of the zero error of the Coriolis gyro (1') having:
- a disturbance unit (27) which applies appropriate disturbance forces to the resonator (2) of the Coriolis gyro (1') such that at least one natural oscillation of the resonator (2) is stimulated, which differs from the stimulating oscillation and the read oscillation of the resonator (2), and
- a disturbance signal detection unit (26, 28, 29, 30, 31), which determines a disturbance component, which is contained in a read signal that represents the read oscillation and has been produced by the stimulation of the at least one natural oscillation, as a measure of the zero error.

8. The Coriolis gyro (1') as claimed in claim 7, **characterized in that** the disturbance signal detection unit comprises two demodulators (28, 29), which operate in quadrature with respect to one another, two low-pass filters (30, 31) and a control and evaluation unit (26), with the demodulators (28, 29) being supplied with the read oscillation tapped-off signal, with the output signals from the two demodulators (28, 29) being filtered by in each case one of the low-pass filters (30, 31), and with the output signals from the low-pass filters (30, 31) being supplied to the control and evaluation unit (26), which determines the zero error on this basis.

9. The Coriolis gyro (1') as claimed in claim 8, **characterized in that** the control and evaluation unit (26) acts on the disturbance unit on the basis of the signals supplied to it, by which means the frequencies of the disturbance forces can be controlled by the control and evaluation unit (26).

## Revendications

1. Procédé de détermination d'une déviation résiduelle d'un gyroscope vibrant (1'), dans lequel
- le résonateur (2) du gyroscope vibrant (1') est alimenté avec des forces parasites correspondantes, de sorte qu'au moins une oscillation propre du résonateur (2), qui se différencie de l'oscillation d'excitation et de l'oscillation de lecture du résonateur (2), est excitée, et
- une modification du signal de lecture représentant l'oscillation de lecture, qui résulte de l'excitation de la au moins une oscillation propre, est déterminé comme mesure pour la déviation résiduelle.

2. Procédé selon la revendication 1, **caractérisée en ce que** les forces parasites sont des forces alternatives avec des fréquences parasites correspondantes, où les fréquences parasites sont les fréquences d'oscillation propre du résonateur (2).

3. Procédé selon la revendication 2, **caractérisé en ce que** la modification du signal de lecture est détectée, alors que le signal de lecture est soumis à un processus de démodulation en fonction des fréquences parasites.

4. Procédé selon l'une des revendications 1 à 3, **caractérisé en ce que** la détermination de la quantité de déviation résiduelle, qui est provoquée par la au moins une oscillation propre, est effectuée par détection des forces de la modification correspondante du signal de lecture, détermination de l'acuité de résonance correspondante de l'oscillation propre et par calcul des forces et de l'acuité de résonance déterminées.

5. Procédé selon la revendication 4, **caractérisé en ce que** la détermination de l'acuité de résonance d'une oscillation propre est effectuée par désaccord de la fréquence parasite correspondants dans le cas de mesures simultanées de la modification qu'elle provoque dans le signal de lecture.

6. Procédé selon l'une des revendications précédentes, **caractérisé en ce que** plusieurs oscillations propres successives du résonateur (2) sont excitées, des modifications correspondantes du signal de lecture sont détectées, et des quantités de déviation résiduelle correspondantes sont déterminées, où la déviation résiduelle du gyroscope vibrant (1') est définie par addition des quantités de déviation résiduelle.

7. Gyroscope vibrant (1') comportant un résonateur (2), **caractérisé par** un dispositif pour définir la déviation résiduelle du gyroscope vibrant (1'), comportant :
- une unité parasite (27), qui alimente le résonateur (2) du gyroscope vibrant (1') avec des forces parasites correspondantes de sorte qu'au moins une oscillation propre du résonateur (2) est excitée, qui se différencie de l'oscillation d'excitation et de l'oscillation de lecture du résonateur (2), et
- une unité de détection de signal parasite (26, 28, 29, 30, 31), qui détermine une partie parasite, qui est contenue dans un signal de lecture représentant l'oscillation de lecture et est provoquée par l'excitation d'au moins une oscillation propre, comme mesure pour la déviation résiduelle.

8. Gyroscope vibrant (1') selon la revendication 7, **caractérisé en ce que** l'unité de détection de signal parasite est constituée de deux démodulateurs fonctionnant en quadrature (28, 29), de deux filtres passe bas (30, 31) et d'une unité de commande et d'évaluation (26), dans lequel le signal de prélèvement d'oscillation de lecture est délivré aux démodulateurs (28, 29), les signaux à la sortie des deux démodulateurs (28, 29) sont filtrés par l'un respectif des filtres passe bas (30, 31) et les signaux de sortie des filtres passe bas (30, 31) sont délivrés à l'unité de commande et d'évaluation (26), qui détermine la déviation résiduelle se basant sur ceux-ci.

9. Gyroscope vibrant (1') selon la revendication 8, **caractérisé en ce que** l'unité de commande et d'évaluation (26) alimente, en fonction des signaux qui lui sont délivrés, l'unité parasite grâce à laquelle les fréquences des forces parasites peuvent être réglées par l'unité de commande et d'évaluation (26).
